# EUROPEAN PATENT APPLICATION

(11) **EP 4 574 705 A1**
(43) Date of publication of application: **25.06.2025**
(21) Application number: 23912699.8
(22) Date of filing: 14.12.2023
(51) Int. Cl.: B65D 71/70, B65D 81/05, H01M 50/244, G08B 25/04, B65G 43/08, B65G 47/88

(54) **BATTERY TRAY AND BATTERY TRANSFER SYSTEM**

(30) Priority: 27.12.2022 KR 20220185679
(71) Applicant: LG Energy Solution, Ltd., Seoul 07335 (KR)
(72) Inventor: LEE, Hu-Jun, Daejeon 34122 (KR)
(74) Representative: Goddar, Heinz J.
(86) International application number: PCT/KR2023/020688
(87) International publication number: WO 2024/144024

(57) **Abstract**

The present disclosure relates to a battery tray and a battery transfer system that may safely transfer produced batteries. Specifically, in the present disclosure, by using magnetism to reduce the impact amount applied to the battery tray, it is possible to reduce the impact applied to the battery inserted into the battery tray. Therefore, according to an embodiment of the present disclosure, the battery may be transferred safely.

## Description

### TECHNICAL FIELD

The present application claims priority to Korean Patent Application No. 10-2022-0185679 filed on December 27, 2022 in the Republic of Korea, the disclosures of which are incorporated herein by reference.

The present disclosure relates to a battery tray and a battery transfer system, and more specifically, to a battery tray and a battery transfer system that may safely transfer produced batteries.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

After these batteries are produced, they are placed in a battery tray, and the battery tray may be moved through a transfer device such as a conveyor. If shock is applied to the battery tray during the battery transfer process, problems such as cracks may occur in the produced battery. For example, shock may occur between the battery trays, and shock may occur between the stopper device provided on the conveyor and the battery tray.

Therefore, it is necessary to develop technology that may safely transfer batteries by reducing the shock generated during the transfer process of produced batteries.

### DISCLOSURE

### Technical Problem

The present disclosure is designed to solve the problems of the related art, and therefore the present disclosure is directed to providing a battery tray and a battery transfer system that may safely transfer batteries.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A battery tray according to one aspect of the present disclosure may comprise a housing; a receiving portion installed inside the housing and configured to allow a battery cell to be inserted; at least one magnetic unit configured to be attached to an outer surface of the housing; a measuring unit configured to measure transfer information of the battery tray; and a communication unit configured to output the transfer information measured by the measuring unit to the outside.

When a plurality of magnetic units are attached to the outer surface of the housing, the magnetic units may be configured so that the magnetic units facing the outside of the housing have the same polarities.

A battery transfer system according to another aspect of the present disclosure may comprise the battery tray according to one aspect of the present disclosure; a transfer device configured to transfer the battery tray along a preset transfer direction; a communication device connected to enable communication with the communication unit and configured to calculate a distance to the battery tray using communication time with the communication unit; and a control device configured to determine a location of the battery tray in the transfer device based on the distance calculated by the communication device.

A battery transfer system according to still another aspect of the present disclosure may further comprise a stopper device fixedly coupled to the transfer device to stop the transfer of the battery tray; and a magnetic device attached to an outer surface of the stopper device and configured to exhibit magnetism depending on an operation state.

The magnetic device may be configured so that a polarity of the magnetic device toward the battery tray is the same as a polarity of the magnetic unit toward the outside of the housing.

The control device may be configured to control the operation state of the magnetic device based on the location of the battery tray and a location of the stopper device.

The control device may be configured to control the operation state of the magnetic device so that the magnetic device exhibits magnetism when a distance between the location of the battery tray and the location of the stopper device is less than or equal to a preset reference distance.

The stopper device may be fixedly coupled to the transfer device at a point where a movement direction of the battery tray by the transfer device changes.

The communication device may be configured to receive the transfer information from the communication unit and calculate an impact amount applied to the battery tray based on the received transfer information.

The control device may be configured to change a communication period between the communication unit and the communication device and a measurement period of the measuring unit when the impact amount calculated by the communication device is more than or equal to a preset threshold impact amount.

The control device may be configured to further change a communication intensity of the communication unit when the calculated impact amount is more than or equal to the threshold impact amount.

### Advantageous Effects

According to one aspect of the present disclosure, because the battery may be safely transferred, it is possible to prevent defects such as cracks from occurring in the battery during the transfer process.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a battery tray according to an embodiment of the present disclosure.
FIG. 2 is a diagram schematically showing an exemplary configuration of the battery tray according to an embodiment of the present disclosure.
FIG. 3 is a diagram schematically showing a battery transfer system according to another embodiment of the present disclosure.
FIGS. 4 to 7 are diagrams schematically showing exemplary configurations of the battery transfer system according to another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, a preferred embodiment of the present disclosure will be described in detail with reference to the accompanying drawings.

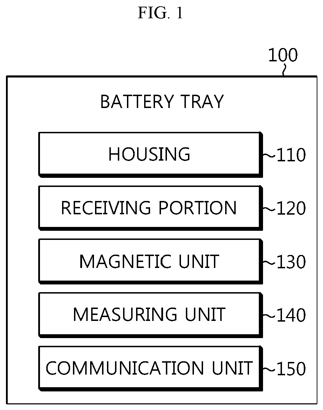

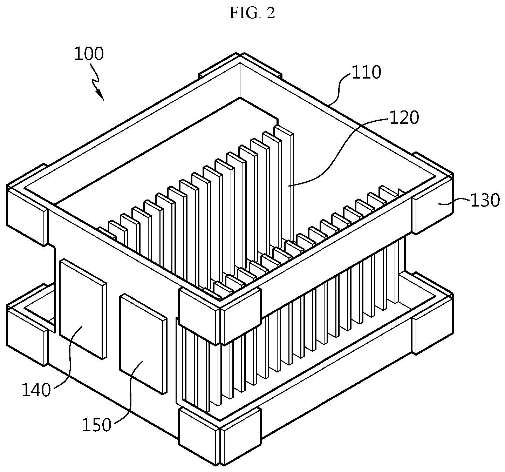

FIG. 1 is a diagram schematically showing a battery tray 100 according to an embodiment of the present disclosure. FIG. 2 is a diagram schematically showing an exemplary configuration of the battery tray 100 according to an embodiment of the present disclosure.

Referring to FIG. 1, the battery tray 100 may include a housing 110, a receiving portion 120, a magnetic unit 130, a measuring unit 140, and a communication unit 150. Specifically, the battery tray 100 may transfer loaded batteries along a designated movement direction.

Here, the battery refers to an independent cell that has a negative electrode terminal and a positive electrode terminal and is physically separable. As an example, a lithium-ion cell or a lithium polymer cell may be considered a battery. Hereinafter, for convenience of explanation, the battery is explained as meaning one independent cell.

The housing 110 may be configured so that other components of the battery tray 100 may be installed therein. For example, the receiving portion 120, the magnetic unit 130, the measuring unit 140, and the communication unit 150 may be installed in the housing 110.

The receiving portion 120 is installed inside the housing 110 and may be configured to allow a battery cell to be inserted.

Specifically, the receiving portion 120 may include a plurality of slots having opposing grooves. Also, one battery may be inserted into each slot.

For example, in the embodiment of FIG. 2, the receiving portion 120 may be installed inside the housing 110 in a vertical direction on the lower plate of the housing 110. Additionally, each of the plurality of slots included in the receiving portion 120 may include grooves facing each other. Therefore, the produced battery may be inserted and fixed in each of the plurality of slots.

The magnetic unit 130 may be configured so that at least one magnetic unit 130 is attached to the outer surface of the housing 110.

Specifically, the magnetic unit 130 may be configured to include a magnetic body. Additionally, the magnetic unit 130 may have a first polarity toward the outside of the housing 110 and a second polarity toward the inside of the housing 110. For example, the magnetic unit 130 may have an N pole toward the outside of the housing 110 and an S pole toward the inside of the housing 110.

Preferably, when a plurality of magnetic units 130 are attached to the outer surface of the housing 110, the magnetic units 130 may be configured so that the magnetic units 130 facing the outside of the housing 110 have the same polarities. For example, the plurality of magnetic units 130 may have an N pole toward the outside of the housing 110 and an S pole toward the inside of the housing 110.

In the embodiment of FIG. 2, 16 magnetic units 130 may be attached to the outer surface of the housing 110. Additionally, the 16 magnetic units 130 may have an N pole toward the outside of the housing 110 and an S pole toward the inside of the housing 110. In other words, when two or more battery trays 100 come close, a repulsive force may act between the battery trays 100.

The measuring unit 140 may be configured to measure transfer information of the battery tray 100.

Specifically, the measuring unit 140 may measure various transfer information that can be measured while the battery tray 100 is being transferred. Preferably, the measuring unit 140 may be configured to measure at least one of acceleration and angular velocity of the battery tray 100. For example, the transfer information of the battery tray 100 measured by the measuring unit 140 may include acceleration information and angular velocity information of the battery tray 100.

The communication unit 150 may be configured to output the transfer information measured by the measuring unit 140 to the outside.

For example, the communication unit 150 may be attached to the transferred battery tray 100. Therefore, the communication unit 150 may output the transfer information to the outside through wireless communication. Preferably, the communication unit 150 may output the transfer information to the outside using ultra wide band (UWB) wireless technology.

The battery tray 100 according to an embodiment of the present disclosure may further include a magnetic unit 130 to reduce the impact applied to the battery tray 100. Therefore, because the impact applied to the battery loaded on the battery tray 100 is alleviated, it is possible to prevent problems such as cracks from occurring in the battery during the transfer process.

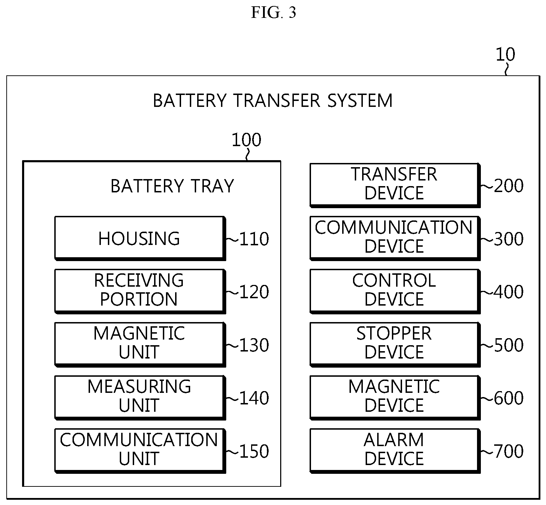

FIG. 3 is a diagram schematically showing a battery transfer system 10 according to another embodiment of the present disclosure.

Referring to FIG. 3, the battery transfer system 10 may include a battery tray 100, a transfer device 200, a communication device 300, and a control device 400.

Since the battery tray 100 included in the battery transfer system 10 corresponds to the battery tray 100 described above, its description is omitted.

The transfer device 200 may be configured to transfer the battery tray 100 along a preset transfer direction.

Specifically, the transfer device 200 may be pre-installed to transfer the battery tray 100 in a preset transfer direction. That is, the battery tray 100 may be introduced at one end of the transfer device 200, the battery tray 100 may be transferred along the preset transfer direction, and the battery tray 100 may be output at the other end of the transfer device 200.

For example, the transfer device 200 may be a conveyor capable of transferring the battery tray 100. After the battery tray 100 is introduced into the transfer device 200, the battery tray 100 may be moved along the transfer direction set by the transfer device 200.

The communication device 300 may be connected to communicate with the communication unit 150.

For example, the communication device 300 may be connected to the communication unit 150 through wireless communication. Preferably, the communication device 300 may be connected to the communication unit 150 to enable bi-directional communication.

The communication device 300 may be configured to calculate the distance to the battery tray 100 using the communication time with the communication unit 150.

For example, the communication device 300 may transmit the first signal to the communication unit 150 of the battery tray 100. The communication unit 150, which has transmitted the first signal, may transmit the second signal to the communication device 300. The communication device 300 may calculate the distance from the battery tray 100 using the communication time from the time of transmitting the first signal to the time of receiving the second signal. The communication device 300 may calculate the distance to battery tray 100 by multiplying the speed of the first signal and the second signal and the communication time.

Preferably, a plurality of communication devices 300 may be provided. For example, each of the plurality of communication devices 300 may calculate the distance to the battery tray 100. Also, each of the plurality of communication devices 300 may transmit the distance information about the calculated distance to the control device 400.

The control device 400 may be configured to determine the location of the battery tray 100 in the transfer device 200 based on the distance calculated by the communication device 300.

Specifically, the control device 400 may determine the location of the battery tray 100 in the transfer device 200. Preferably, the control device 400 may receive the distance information from the plurality of communication devices 300. Also, the control device 400 may determine the location of the battery tray 100 based on the received plurality of distance information.

For example, it is assumed that the battery transfer system 10 includes three communication devices 300. The control device 400 may receive three distance information from three communication devices 300. Also, the control device 400 may determine the location of the battery tray 100 by combining the three received distance information.

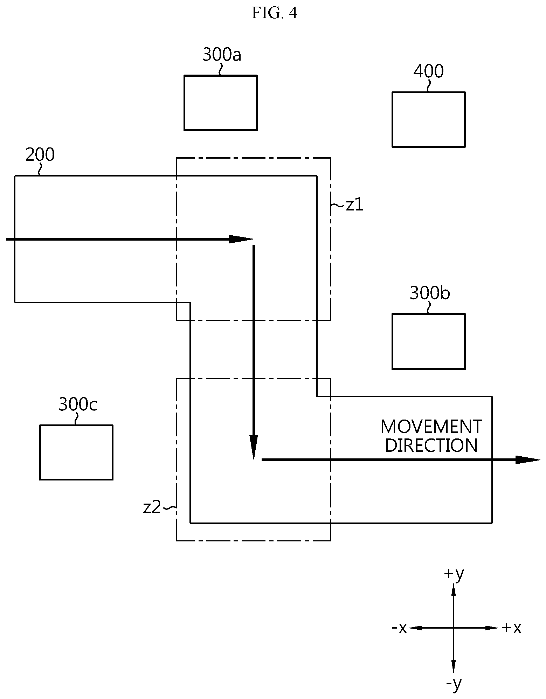

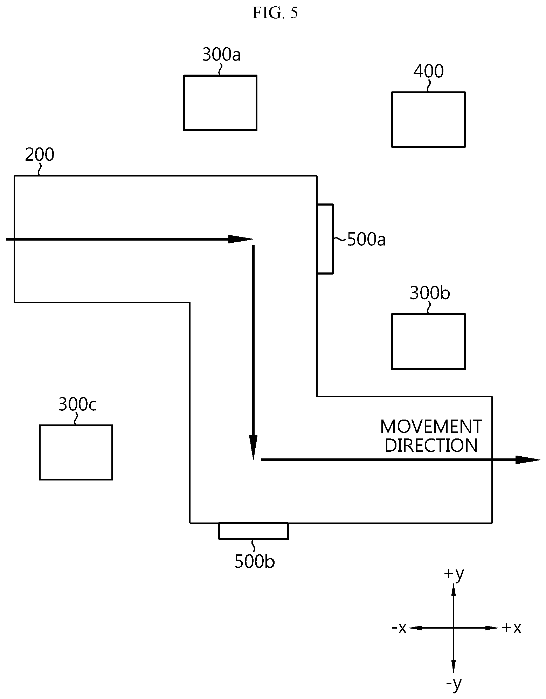

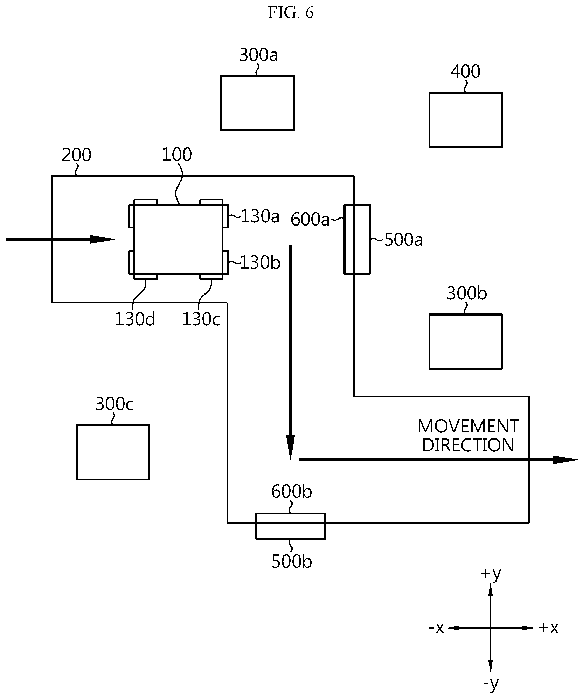

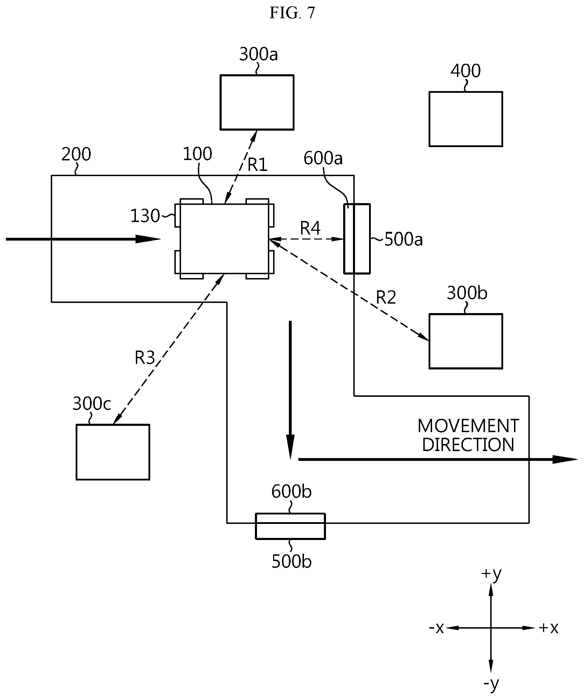

FIGS. 4 to 7 are diagrams schematically showing exemplary configurations of the battery transfer system 10 according to another embodiment of the present disclosure. Specifically, the embodiment of FIG. 4 is a diagram schematically showing the transfer device 200, the communication device 300, and the control device 400. The embodiment of FIG. 5 is a diagram further illustrating the stopper device 500 in the embodiment of FIG. 4. The embodiment of FIG. 6 is a diagram further illustrating the magnetic device 600 in the embodiment of FIG. 5. The embodiment of FIG. 7 is a diagram further illustrating the battery tray 100 in the embodiment of FIG. 6.

Referring to FIG. 3, the battery transfer system 10 may further include a stopper device 500 and a magnetic device 600.

The stopper device 500 may be fixedly coupled to the transfer device 200 to stop the transfer of the battery tray 100.

Specifically, the stopper device 500 may be fixedly coupled to the transfer device 200 at a point where the movement direction of the battery tray 100 by the transfer device 200 is changed. For example, when the movement direction of the battery tray 100 changes, the battery tray 100 may separate from the transfer device 200. Therefore, in order to prevent the battery tray 100 from being separated, the stopper device 500 may be fixedly coupled at the point where the movement direction of the transfer device 200 changes.

For example, in the embodiment of FIG. 4, the movement direction may start in the +x direction, change to the -y direction, and then change to the +x direction again. That is, the movement direction may be changed in the z1 section and the z2 section.

If the battery tray 100 continues to move in the +x direction in the z1 section, the battery tray 100 may separate from the transfer device 200. Likewise, if the battery tray 100 continues to move in the -y direction in the z2 section, the battery tray 100 may separate from the transfer device 200. Therefore, in order to prevent the battery tray 100 from being separated, the stopper device 500 may be installed at the point where the movement direction changes, as shown in the embodiment of FIG. 5.

In the embodiment of FIG. 5, the first stopper device 500a may prevent the battery tray 100 from separating in the +x direction. The second stopper device 500b may prevent battery tray 100 from separating in the -y direction.

The magnetic device 600 is attached to the outer surface of the stopper device 500 and may be configured to exhibit magnetism depending on the operation state.

In the embodiment of FIG. 5, when the battery tray 100, which is transferred along the movement direction, collides with the first stopper device 500a or the second stopper device 500b, shock may be applied to the battery tray 100 and the battery. In other words, separation of the battery tray 100 may be prevented, but shock may be applied to the battery, so battery defects may occur. Therefore, in order to alleviate the impact applied to the battery tray 100, the magnetic device 600 may be attached to the stopper device 500.

Specifically, the magnetic device 600 may be attached to the outer surface of the stopper device 500 to correspond to the movement direction of the battery tray 100. In the embodiment of FIG. 6, the first magnetic device 600a may be attached to the outer surface of the first stopper device 500a. Additionally, the second magnetic device 600b may be attached to the outer surface of the second stopper device 500b.

Preferably, the magnetic device 600 may be configured so that the polarity facing the battery tray 100 is the same as the polarity of the magnetic unit 130 facing the outside of the housing 110. For example, when the battery tray 100 approaches the magnetic device 600 with magnetism, a repulsive force may act between the magnetic unit 130 of the battery tray 100 and the magnetic device 600. The impact between the battery tray 100 and the magnetic device 600 may be reduced by this repulsive force.

In the embodiment of FIG. 6, it is assumed that the polarity of the magnetic unit 130 facing the outside of the housing 110 is the N pole. In the first magnetic device 600a, the polarity facing the -x direction may be the N pole. Additionally, the polarity facing the +y direction in the second magnetic device 600b may be the N pole.

For example, when the battery tray 100 moves in the +x direction and approaches the first stopper device 500a, the first magnetic unit 130a, the second magnetic unit 130b and the first magnetic device 600a may become closer. In this case, a repulsive force may act between the first magnetic unit 130a and the first magnetic device 600a and between the second magnetic unit 130b and the first magnetic device 600a. Therefore, the impact amount of the battery tray 100 and the first magnetic device 600a may be reduced.

As another example, when the battery tray 100 moves in the -y direction and gets closer to the second stopper device 500b, the third magnetic unit 130c, the fourth magnetic unit 130d and the second magnetic device 600b may get closer. In this case, a repulsive force may act between the third magnetic unit 130c and the second magnetic device 600b and between the fourth magnetic unit 130d and the second magnetic device 600b. Therefore, the impact amount of the battery tray 100 and the second magnetic device 600b may be reduced.

The battery transfer system 10 has the advantage of effectively reducing the impact applied to the battery tray 100 while guiding the movement direction of the battery tray 100 so that the battery tray 100 does not separate from the transfer device 200. Therefore, in the process of transferring the battery through the battery tray 100, the possibility of battery defects due to impact may be significantly reduced.

Below, an embodiment in which the control device 400 controls the operation state of the magnetic device 600 will be described using the embodiment of FIG. 7.

In the embodiment of FIG. 7, the first communication device 300a, the second communication device 300b, and the third communication device 300c may be connected to communicate with the communication unit 150 of the battery tray 100. In addition, each of the first communication device 300a, the second communication device 300b, and the third communication device 300c may calculate the distance from the battery tray 100. The distance between the first communication device 300a and the battery tray 100 may be R1, the distance between the second communication device 300b and the battery tray 100 may be R2, and the distance between the third communication device 300c and the battery tray 100 may be R3.

The control device 400 may determine the location of the battery tray 100 in the transfer device 200 based on R1, R2, and R3. Specifically, the control device 400 may determine the location of the battery tray 100 according to the trilateration method using the location of the first communication device 300a and R1, the location of the second communication device 300b and R2, and the location of the third communication device 300c and R3.

The control device 400 may be configured to control the operation state of the magnetic device 600 based on the location of the battery tray 100 and the location of the stopper device 500.

Specifically, the control device 400 may be configured to control the operation state of the magnetic device 600 so that the magnetic device 600 exhibits magnetism when the distance between the location of the battery tray 100 and the location of the stopper device 500 is less than or equal to a preset reference distance. Preferably, the control device 400 may control the operation state of the magnetic device 600 so that the magnetic device 600 exhibits magnetism when the distance between the location of the battery tray 100 and the location of the stopper device 500 reaches the preset reference distance.

In the following, since the magnetic device 600 is attached to the outer surface of the stopper device 500, the location of the stopper device 500 and the location of the magnetic device 600 are assumed to be substantially the same.

Specifically, the control device 400 may calculate the distance between the determined location of the battery tray 100 and the location where the stopper device 500 is installed.

For example, in the embodiment of FIG. 7, the control device 400 may calculate the distance between the location of the battery tray 100 and the first stopper device 500a as R4. Preferably, since the battery tray 100 is moving in the +x direction toward the first stopper device 500a, the distance between the battery tray 100 and the second stopper device 500b may not be calculated. In other words, the control device 400 may calculate the distance between the stopper device 500 and the battery tray 100 at the closest location in the direction toward which the battery tray 100 is heading.

Additionally, the control device 400 may compare the calculated distance (distance between the battery tray 100 and the stopper device 500) with a preset reference distance. Here, the reference distance may be preset to a minimum distance at which the magnetic force by the magnetic device 600 may be maximized before the battery tray 100 reaches the magnetic device 600 when the control device 400 controls the operation of the magnetic device 600. That is, the reference distance may be set in advance for the transfer device 200 based on a preset unit transfer distance (e.g., transfer distance per second) and the time from the time point when the operation of the magnetic device 600 is changed to the time point when the maximum magnetic force is expressed.

For example, in the embodiment of FIG. 7, when R4 reaches the preset reference distance, the control device 400 may change the operation state of the first magnetic device 600a so that the first magnetic device 600a exhibits magnetism.

The control device 400 may control the operation state of the magnetic device 600 into a turn-on state or a turn-off state. The turn-on state means a state in which current flows through the magnetic device 600 and the magnetic device 600 exhibits magnetism according to the current flow. The turn-off state means a state in which no current flows to the magnetic device 600 and the magnetic device 600 does not exhibit magnetism.

Here, the current direction in the turn-on state may be preset to a direction in which the polarity of the magnetic device 600 facing the battery tray 100 is the same as the polarity of the magnetic unit 130 facing the outside of the housing 110. For example, it is assumed that the polarity of the magnetic unit 130 facing the outside of the housing 110 is the N pole, and the polarity of the magnetic unit 130 facing the inside of the housing 110 is the S pole. The current direction in the turn-on state may be set in advance so that the polarity of the magnetic device 600 facing the battery tray 100 is the N pole, and the polarity of the magnetic device 600 facing the stopper device 500 is the S pole.

Because unnecessary energy is consumed if the state of the magnetic device 600 remains in the turn-on state even though the battery tray 100 has not reached the stopper device 500, the control device 400 may control the operation state of the magnetic device 600 to the turn-on state if the distance between the battery tray 100 and the stopper device 500 is less than or equal to the reference distance.

The battery transfer system 10 prevents unnecessary resource consumption and may reduce the impact amount applied to the battery tray 100. Therefore, the battery may be transferred safely and efficiently.

The communication device 300 may be configured to receive the transfer information from the communication unit 150 and calculate the impact amount applied to the battery tray 100 based on the received transfer information.

Specifically, the communication device 300 may calculate the impact amount applied to the battery tray 100 based on at least one of the acceleration information and the angular velocity information received from the communication unit 150. Preferably, the communication device 300 may calculate the impact amount applied to the battery tray 100 based on the acceleration information and the angular velocity information.

Additionally, the communication device 300 may transmit the impact amount information about the calculated impact amount to the control device 400.

The control device 400 may be configured to change the communication period between the communication unit 150 and the communication device 300 and the measurement period of the measuring unit 140 when the impact amount calculated by the communication device 300 is greater than or equal to a preset threshold impact amount.

Specifically, the threshold impact amount may be set in advance to an impact amount that may cause a defect in the battery. For example, if the impact amount is more than or equal to the threshold impact amount, cracks or the like may occur in the battery.

If the calculated impact amount is more than or equal to the threshold impact amount, the control device 400 may change the communication period and the measurement period to more precisely detect the location of the battery tray 100. Preferably, the control device 400 may change the communication period so that the communication period between the communication unit 150 and the communication device 300 is shortened, and change the measurement period so that the measurement period of the measuring unit 140 is shortened. In other words, the transfer information for the battery tray 100 may be measured more frequently according to the shortened measurement period, and the transfer information may be transmitted to communication device 300 more quickly than before according to the shortened communication period. Because the control device 400 may receive the distance information to the battery tray 100 from the communication device 300 more quickly than before, the control device 400 may determine the location of the battery tray 100 in the transfer device 200 in a shorter cycle than before.

Additionally, the control device 400 may be configured to further change the communication intensity of the communication unit 150 if the calculated impact amount is greater than or equal to the threshold impact amount.

Referring to FIG. 3, the battery transfer system 10 may further include an alarm device 700.

The alarm device 700 may be configured to receive a signal output from the communication unit 150, and to emit light or blink when the intensity of the received signal is greater than or equal to a preset threshold intensity. Specifically, if the calculated impact amount is more than or equal to the threshold impact amount, the control device 400 may change the communication intensity of the communication unit 150 to be more than or equal to the threshold intensity. That is, a signal having an intensity greater than or equal to the threshold intensity may be output from the communication unit 150. Accordingly, the user or worker may easily check whether the battery tray 100 transferred through the transfer device 200 has a defect by checking the alarm device 700.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Explanation of reference signs)

10: battery transfer system
100: battery tray
110: housing
120: receiving portion
130: magnetic unit
140: measuring unit
150: communication unit
200: transfer device
300: communication device
400: control device
500: stopper device
600: magnetic device
700: alarm device

## Claims

1. A battery tray, comprising:
a housing;
a receiving portion installed inside the housing and configured to allow a battery cell to be inserted;
at least one magnetic unit configured to be attached to an outer surface of the housing;
a measuring unit configured to measure transfer information of the battery tray; and
a communication unit configured to output the transfer information measured by the measuring unit to the outside.

2. The battery tray according to claim 1,
wherein when a plurality of magnetic units are attached to the outer surface of the housing, the magnetic units are configured so that the magnetic units facing the outside of the housing have the same polarities.

3. A battery transfer system, comprising:
the battery tray according to claim 1 or 2;
a transfer device configured to transfer the battery tray along a preset transfer direction;
a communication device connected to enable communication with the communication unit and configured to calculate a distance to the battery tray using communication time with the communication unit; and
a control device configured to determine a location of the battery tray in the transfer device based on the distance calculated by the communication device.

4. The battery transfer system according to claim 3, further comprising:
a stopper device fixedly coupled to the transfer device to stop the transfer of the battery tray; and
a magnetic device attached to an outer surface of the stopper device and configured to exhibit magnetism depending on an operation state.

5. The battery transfer system according to claim 4,
wherein the magnetic device is configured so that a polarity of the magnetic device toward the battery tray is the same as a polarity of the magnetic unit toward the outside of the housing.

6. The battery transfer system according to claim 4,
wherein the control device is configured to control the operation state of the magnetic device based on the location of the battery tray and a location of the stopper device.

7. The battery transfer system according to claim 6,
wherein the control device is configured to control the operation state of the magnetic device so that the magnetic device exhibits magnetism when a distance between the location of the battery tray and the location of the stopper device is less than or equal to a preset reference distance.

8. The battery transfer system according to claim 4,
wherein the stopper device is fixedly coupled to the transfer device at a point where a movement direction of the battery tray by the transfer device changes.

9. The battery transfer system according to claim 3,
wherein the communication device is configured to receive the transfer information from the communication unit and calculate an impact amount applied to the battery tray based on the received transfer information, and
wherein the control device is configured to change a communication period between the communication unit and the communication device and a measurement period of the measuring unit when the impact amount calculated by the communication device is more than or equal to a preset threshold impact amount.

10. The battery transfer system according to claim 9,
wherein the control device is configured to further change a communication intensity of the communication unit when the calculated impact amount is more than or equal to the threshold impact amount.
